(19) Europäisches Patentamt
European Patent Office
Office européen des brevets

(11) **EP 2 183 525 B1**

(12) **EUROPÄISCHE PATENTSCHRIFT**

(45) Veröffentlichungstag und Bekanntmachung des Hinweises auf die Patenterteilung:
**26.02.2014  Patentblatt 2014/09**

(21) Anmeldenummer: **08801186.1**

(22) Anmeldetag: **18.08.2008**

(51) Int Cl.:
*F24C 7/08* *(2006.01)*        *G01K 7/42* *(2006.01)*

(86) Internationale Anmeldenummer:
**PCT/DE2008/001363**

(87) Internationale Veröffentlichungsnummer:
**WO 2009/026887 (05.03.2009 Gazette 2009/10)**

(54) **VERFAHREN ZUR ANZEIGE EINER RESTGARZEIT**

METHOD FOR DISPLAYING THE RESIDUAL TIME UNTIL A COOKING PROCESS HAS BEEN FINISHED

PROCÉDÉ POUR L'INDICATION D'UN TEMPS DE CUISSON RESTANT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.08.2007  DE 102007040316**
**27.02.2008  PCT/DE2008/000346**

(43) Veröffentlichungstag der Anmeldung:
**12.05.2010  Patentblatt 2010/19**

(73) Patentinhaber: **Rational AG**
**86899 Landsberg/Lech (DE)**

(72) Erfinder:
• GREINER, Michael
  86899 Landsberg (DE)
• HAAS, Christine
  86899 Landsberg (DE)
• NIELSEN, Reinhard
  86862 Lamerdingen (DE)
• BRINKMANN, Torsten
  87665 Mauerstetten (DE)
• KLING, Judith
  86899 Landsberg (DE)
• STERZEL, Roland
  60437 Frankfurt (DE)
• HEIM, Martin
  88179 Oberreute (DE)

(74) Vertreter: **Weber-Bruls, Dorothée**
**Jones Day**
**Nextower**
**Thurn-und-Taxis-Platz 6**
**60313 Frankfurt am Main (DE)**

(56) Entgegenhaltungen:
EP-A- 0 701 387          DE-A1- 4 217 943
DE-A1- 10 327 864       DE-A1- 19 609 116
DE-A1- 19 718 399       DE-A1-102004 049 927
DE-A1-102006 035 745    US-A- 5 075 121
US-A1- 2006 049 187     US-B1- 7 057 142
US-B1- 7 102 107

**Beschreibung**

Die vorliegende Erfindung betrifft ein Verfahren zur Anzeige einer Restgarzeit während eines Garvorgangs in einem Gargerät mit einem, insbesondere durch eine Tür verschließbaren, Garraum, einer Heizeinrichtung, einer Anzeigeeinrichtung, einer Bedieneinrichtung, einer Speichereinrichtung, einer Steueroder Regeleinrichtung und zumindest einer Sensiereinrichtung, wobei über die Bedieneinrichtung zumindest eine Soll-Gargutgröße eines bestimmten Garguts und/oder Soll-Gargröße des Gargeräts eingestellt werden kann, in deren Abhängigkeit die Restgarzeit bestimmt wird, um dann auf der Anzeigeeinrichtung angezeigt zu werden.

Solch ein Verfahren ist beispielsweise aus der DE 27 33 362 A1 bekannt. Dabei können als Soll-Gargutgrößen die Gargutart, die Masse an Gargut und die Lagertemperatur des Garguts zum Beginn eines Garvorgangs über die Bedieneinrichtung eingegeben werden, wodurch jedoch die Garzeit bzw. Restgarzeit nur äußerst grob abgeschätzt werden kann.

Die gattungsgemäße US 7,057,142 B1 offenbart eine Anzeigeeinrichtung, über die ein Gargut samt internen und externen Gargrad auswählbar ist und auf der eine in Abhängigkeit von der entsprechenden Auswahl bestimmte Restgarzeit anzeigbar ist. Diese Restgarzeit ist nach einer Lasterkennung in Abhängigkeit von erfassten Temperaturen neu berechenbar.

Die Vorhersage einer Restgarzeit aus der Änderungsrate einer Temperatur in einem Gargut ist aus der US 7,102,107 B1 bekannt.

Ein anderer Ansatz zur Berechnung und späteren Anzeige einer Restgarzeit ist aus der gattungsgemäßen DE 42 17 943 A1 oder der DE 196 09 116 A1 bekannt. Danach wird bei Kenntnis einer Kernendtemperatur eine Restgardauer in Abhängigkeit von während eines Garvorgangs erfassten Kerntemperaturwerten berechnet. Diese Restgarzeitdauerberechnung ist nicht unmittelbar zu Beginn eines Garvorgangs möglich und hat sich nur in bestimmten Garverfahren als geeignet herausgestellt, nämlich nur in einfachen kerntemperaturgesteuerten Verfahren.

Die EP 0 701 387 A2 betrifft eine Vorrichtung und ein Verfahren zum Betrieb einer Kocheinrichtung, insbesondere in Form eines Mikrowellenofens. Dabei wird nach dem Beginn eines Garvorgangs so lange eine Feuchtigkeitsmessung durchgeführt, bis ein vordefiniertes Kriterium, z. B. dass ein vorbestimmter Feuchtigkeitswert erreicht ist oder der zeitliche Verlauf der Feuchtigkeit einen Maximalwert eingenommen hat, erfüllt ist, um anhand der bis dorthin aufgenommenen Messwerte einen Gargrad eines Garguts zu bestimmen. Dieser Gargrad wird dann eingesetzt, um einen Endzeitpunkt zur Beendigung eines Garvorgangs, zu dem eine Heizeinrichtung ausgeschaltet werden soll und eine Anzeige ausgegeben wird, dass der Vorgang beendet wurde, zu bestimmen. Somit offenbart auch diese Druckschrift lediglich eine Restgarzeitdauerberechnung nach Ablauf einer bestimmten Zeitspanne des Garvorgangs.

Auch die DE 10 327 864 A1, die ein Verfahren zur berührungslosen Steuerung eines Garvorgangs bei einem Gargerät betrifft, offenbart lediglich die Extrapulation einer Restgardauer in Abhängigkeit eines Ausgangssignals eines Sensors nach einem erstmaligen Errechnen eines Extremwerts einer ersten Ableitung einer Gaskonzentration nach der Zeit, also nicht unmittelbar zu Beginn eines Garvorgangs.

Die DE 197 18 399 A1 offenbart die Ermittlung des Zeitpunktes des Endes eines Garvorgangs auf der Grundlage von Werten zumindest einer Garzustandsgröße, die während eines Garvorgangs zu verschiedenen Zeiten ermittelt wurden, wobei der Zeitpunkt des Endes des Garvorgangs auf der Grundlage des zuletzt ermittelten Wertes der Garzustandsgröße ermittelt werden kann.

Die Dauer einer Garphase in Abhängigkeit der Differenz zwischen einer Kerntemperatur und einer Oberflächentemperatur zu bestimmen, ist insbesondere aus der US 5,075,121 bekannt.

Ferner offenbart die EP 0 248 581 B1 die Berechnung einer Restgarzeit durch Vergleich einer Ist-Garraumtemperatur zu einem bestimmten Zeitpunkt mit einer vorherbestimmten Bezugsgröße, die empirisch bestimmt oder über eine Formel berechnet ist. Auch dieses Verfahren weist den Nachteil auf, dass es unmittelbar zu Beginn eines Garvorgangs keine Restgarzeitanzeige gestattet und nur bei ganz speziellen Garverfahren einsetzbar ist, wie beispielsweise bei einfachen Garverfahren, bei denen lediglich eine Garraumtemperatur vorgegeben wird.

Die DE 103 00 465 A1 lehrt ein Garverfahren, bei dem mit Hilfe einer Cluster-Analyse sich Garverfahren trotz ihrer hoch komplexen Sachzusammenhänge verdichten, typisieren, profilieren und mathematisch eindeutig kennzeichnen sowie beschreiben lassen. Insbesondere können dadurch neue Garprozess-Ist-Abläufe bereits frühzeitig anhand ihrer typischen Ausbildung erkannt und automatisch einem repräsentativen Garprofil zugeordnet werden, um ein vollautomatisches Garen zu ermöglichen. Zudem ist solch ein Garverfahren selbstlernend.

Aus der DE 10 2004 013 553 B4 ist ein Gargerät mit einer Speichereinrichtung bekannt, in der Parameter hinterlegt sind, die landesspezifisch für den jeweiligen Aufstellungsort des Gargeräts und/oder spezifisch für jeweils eine auswählbare Bediensprache des Gargeräts voreingestellt sind.

Schließlich ist in der nicht vorveröffentlichten DE 10 2006 057 923 offenbart, dass während des Ablaufs eines Garvorgangs in einem Gargerät zum Erreichen eines bestimmten Soll-Klimas in dem Garraum des Gargeräts, wie einer bestimmten Soll-Garraumtemperatur in einem Vorheizschritt vor Beladen eines Garraums mit Gargut, das mit einem bestimmten Garverfahren zu garen ist, zur Anzeige des Fortschritts beim Erreichen des Soll-Klimas eine Einteilung in zwei Zeitintervalle stattfinden muss. Da nämlich zu Beginn des Ablaufs des Programms der Verlauf einer für das Klima in dem Garraum charakteristischen ersten Größe, wie der Garraumtemperatur, über die Zeit noch nicht bekannt ist, kann besagter Verlauf auch noch nicht zur Berechnung des Fortschritts beim Erreichen des Soll-Klimas herangezogen werden, so dass in einem ersten Zeitintervall eine Grob-Abschätzung besagten Fortschritts stattfindet, nämlich zeitlich gesehen rein punktuell. Dabei kann beispielsweise von einem linearen Zusammenhang zwischen der ersten Größe und der Zeit ausgegangen werden. In einem zweiten Zeitintervall findet dann eine genauere Berechnung des Fortschritts durch zumindest einmalige Auswertung des Verlaufs der ersten Größe über die Zeit statt, beispielsweise unter Rückgriff auf empirisch ermittelte und im Gargerät hinterlegte Werte zum zeitlichen Verlauf der ersten Größe.

Aufgabe der vorliegenden Erfindung ist es, das gattungsgemäße Verfahren derart weiterzuentwickeln, dass während des kompletten Garvorgangs eine Restgarzeitanzeige möglich ist, die während des Ablaufs des Garvorgangs präzisiert wird.

Diese Aufgabe wird erfindungsgemäß durch die Merkmale des Kennzeichens von Anspruch 1 gelöst. Die Ansprüche 2 bis 12 beschreiben bevorzugt erfindungsgemäße Verfahren.

Somit wird vorgeschlagen, dass in einer ersten Phase I des Garvorgangs zumindest ein in Abhängigkeit von zumindest einer eingestellten Soll-Gargutgröße abgeschätzter Mittelwert mit Fehlertoleranz der Restgarzeit angezeigt wird, und in zumindest einer weiteren Phase II, III des Garvorgangs zumindest ein in Abhängigkeit von einem Vergleich zwischen in der Speichereinrichtung hinterlegten Werten und zumindest einem über die Sensiereinrichtung erfassten Wert zumindest einer Gargutgröße bestimmter Schätzwert der Restgarzeit angezeigt wird.

Die erste Phase I startet nach Beladen des Garraums mit Gargut zu einem ersten Zeitpunkt $t_1$, der somit nach Auswahl eines Garvorgangs, Auswahl einer Soll-Gargutgröße, Auswahl einer Soll-Gargröße, und/oder Schließen der Tür liegt.

Mit der Erfindung kann ferner vorgesehen sein, dass für die Restgarzeit ein vorgegebener oder auswählbarer Bereich um einen Maximalwert, einen Minimalwert, und/oder den Mittelwert angezeigt werden kann, der vorzugsweise einen Fehlertoleranzbereich umfasst und/oder dessen Breite von der Genauigkeit der Bestimmung des Maximalwerts, Minimalwerts bzw. Mittelwerts abhängt.

Dabei kann vorgesehen sein, dass die Soll-Gargutgröße bestimmt wird aus einem Gargrad, insbesondere umfassend einen internen Gargrad, vorzugsweise bestimmt durch die Kerntemperatur $T_{K4}$ und/oder den C-Wert eines Garguts, und/oder einem externen Gargrad, vorzugsweise bestimmt durch eine Bräunung und/oder Krustenbildung eines Garguts, und/oder einer Gargutbemaßung, insbesondere umfassend eine Garguthöhe, ein Gargutgewicht, eine Gargutdichte und/oder ein Gargutkaliber und/oder einem Auftaugrad zu einem bestimmten Zeitpunkt des Garvorgangs, vorzugsweise am Ende eines Garvorgangsabschnitts, am bevorzugtesten am Garzeitende $t_4$, wobei vorzugsweise jedes Gargut einer über die Bedieneinrichtung einstellbaren Gargutart zugeordnet werden kann, die bei der Bestimmung der Soll-Gargutgröße berücksichtigt wird.

Auch wird mit der Erfindung vorgeschlagen, dass eine Soll-Gargröße bestimmt wird aus einer Garraum-Klimagröße, insbesondere umfassend die Temperatur im Garraum, die Feuchte im Garraum und/oder die Zirkulation im Garraum, und/oder eine Garvorgangsgröße, insbesondere umfassend eine Garzeit und/oder eine Gargeschwindigkeit, zu einem bestimmten Zeitpunkt und/oder innerhalb eines bestimmten Garvorgangabschnitts, vorzugsweise am Ende eines Garvorgangabschnitts.

Weiterhin kann vorgesehen sein, dass der Garvorgang zumindest zwei Garvorgangabschnitte aufweist, wobei zwei aufeinander folgende Garvorgangabschnitte unterschiedliche Soll-Garraum-Klimagrößen aufweisen.

Ferner ist es erfindungsgemäß vorgesehen, dass während der ersten Phase I zur Abschätzung der Restgarzeit ein Vergleich der eingestellten Soll-Gargutgröße mit zuvor empirisch und/oder über zumindest einen ersten Algorithmus bestimmten ersten Werten stattfindet, wobei die empirisch bestimmten ersten Werte in Testgarverfahren und/oder vorherigen Garvorgängen des Gargeräts und/oder anderer, insbesondere baugleicher Gargeräte erfasst worden sind.

Dabei kann vorgesehen sein, dass die empirisch bestimmten ersten Werte, die in vorherigen Garvorgängen anderer, insbesondere baugleicher Gargeräte erfasst worden sind, zuvor, mit einem externen, insbesondere statistischen Verfahren ausgewertet wurden.

Ebenfalls bevorzugt ist erfindungsgemäß, dass die weitere Phase II, III nach Erfassen der Last im Garraum, insbesondere bestimmt durch die Menge an Gargut im Garraum, und/oder Erfassen, ob das Gargut im Garraum frisch, vorgegart oder gefroren ist, und/oder nach Erfassung einer Gargutbemaßung, insbesondere bestimmt durch das Gargutkaliber, zu einem zweiten Zeitpunkt $t_2$ startet.

Dabei kann vorgesehen sein, dass die Last im Garraum in Abhängigkeit von der Garraumtemperatur zu einem bestimmten ersten Zeitpunkt oder von einer ersten Zeitdauer zum Erreichen einer bestimmten Garraumtemperatur oder einem Garraumtemperaturverlauf $T_G$ über die Zeit t, insbesondere durch Erfassung eines Minimums im Garraumtemperaturverlauf, bestimmt wird.

Auch wird vorgeschlagen, dass das Gargutkaliber des Garguts in Abhängigkeit von der Kerntemperatur des Garguts zu einem bestimmten zweiten Zeitpunkt oder von einer zweiten Zeitdauer bis zum Erreichen einer bestimmten Kerntemperatur oder von zumindest einem Temperaturverlauf im Gargut über die Zeit, insbesondere von einem Kerntemperaturverlauf über die Zeit, vorzugsweise in Form der Steigung besagten Verlaufs oder von dem Zeitpunkt des Beginns zumindest eines Temperaturanstiegs, insbesondere des Kerntemperaturanstiegs, im Gargut bestimmt wird.

Ferner kann vorgesehen sein, dass das Gargutkaliber (K) aus der zweiten Zeitdauer (t) vom Beginn des Aufwärmens des Gargutes, insbesondere bestimmt durch den Beginn der Phase I, bis zum Beginn des Anstiegs der Kerntemperatur ermittelt wird, insbesondere in Abhängigkeit von einer aus einer Anwendereingabe oder durch eine Messung ermittelte gargutspezifischen Konstante (c), die proportional zu der Wärmeleitfähigkeit des Garguts ist.

Dabei wird vorgeschlagen, dass entweder einer Vielzahl n von Zeitpunkten $t_i$, (ABC) für den Beginn eines Kerntemperaturanstiegs bestimmte Gargutkaliber zugeordnet werden, vorzugsweise empirisch, und beim Garen eines Garguts ohne Erfassen eines Kerntemperaturanstiegs zu einem Zeitpunkt $t_{ti}$, dem Gargut des dem Zeitpunkt $t_{i+1}$ zugeordneten Gargutkaliber zugewiesen wird, wobei i und n jeweils Elemente der natürlichen Zahlen sind und i+1 < n, oder das Gargutkaliber (K) aus dem Produkt der Zeitdauer (t) und der gargutspezifischen Konstante (c) berechnet wird, also k = t • c.

Zudem wird vorgeschlagen, dass der Temperaturverlauf im Gargut über einen Mehrpunktkerntemperaturfühler erfasst wird, vorzugsweise an wenigstens zwei Messstellen, insbesondere zur Ermittlung des Gargutkalibers aus einem Zeitversatz zwischen den Zeitpunkten des Beginns des Temperaturanstiegs an den Messstellen.

Mit der Erfindung ist vorgesehen, dass die in der weiteren Phase II, III zum Vergleich herangezogenen Werte aus empirisch bestimmten zweiten Werten und/oder über zumindest einen zweiten Algorithmus bestimmte zweite Werte ausgewählt werden.

Erfindungsgemäße Verfahren können dadurch gekennzeichnet sein, dass die ersten und/oder zweiten Werte in der Speichereinrichtung hinterlegt werden und/oder sich, insbesondere zwecks Selbstanlernung, über den Betrieb eines Gargeräts ändern, vorzugsweise zur gewichteten Berücksichtigung der in vorangegangenen Garvorgängen erfassten Werte.

Ferner ist vorgesehen, dass am Ende eines Garvorgangs während desselben erfasste Werte automatisch, insbesondere wenn sie nicht mehr als ungefähr 20% von bereits in der Speichereinrichtung hinterlegten Werten abweichen, in der Speichereinrichtung als erste und/oder zweite Werte hinterlegt werden oder über die Anzeigeeinrichtung eine Anfrage ausgegeben wird, ob die erfassten Werte als erste und/oder zweite Werte in der Speichereinrichtung hinterlegt werden sollen.

Bevorzugt ist erfindungsgemäß, dass während der weiteren Phase II, III bei der Bestimmung der Restgarzeit die tatsächlich verstrichene Zeit und/oder der abgeschätzte Restgarzeitverlauf der ersten Phase I berücksichtigt wird bzw. werden.

Des weiteren kann vorgesehen sein, dass ein Vergleich der in den unterschiedlichen Phasen I, II, III errechneten Restgarzeiten untereinander sowie mit in der Speichereinrichtung hinterlegten Werten zur Plausibilitätsprüfung und/oder Bestimmung einer Korrekturgröße stattfindet.

Dabei kann wiederum vorgesehen sein, dass bei erfasster fehlender Plausibilität ein Signal auf der Anzeigeeinrichtung ausgegeben wird.

Mit der Erfindung kann auch vorgesehen sein, dass im Falle der Bestimmung einer Korrekturgröße dieselbe in folgenden Garvorgängen zur Berechnung der Restgarzeit berücksichtigt wird.

Weiterhin wird erfindungsgemäß vorgeschlagen, dass die zur Restgarzeitbestimmung herangezogenen Werte, insbesondere umfassend die ersten und/oder zweiten Werte, in Abhängigkeit von einer Tageszeit, einem Tag, einer Jahreszeit, einer Saison, einem Aufstellungsort des Gargeräts, einer Bediensprache des Gargeräts und/oder einer aus zuvor erfassten Garvorgängen bestimmten Anwendergewohnheit, wie betreffend die Beschickungsmenge an Gargut, das Gargutkaliber oder dergleichen, ausgewählt werden.

Spezielle Ausführungsformen der Erfindung sind dadurch gekennzeichnet, dass bei zeitgesteuerten Garvorgängen nur eine weitere Phase nach einer Lasterkennung startet.

Bei anderen Ausführungsformen der Erfindung kann vorgesehen sein, dass bei kerntemperaturgesteuerten Garvorgängen zwei weitere Phasen nach einer Lasterkennung und/oder Kalibererkennung nacheinander starten, wobei vorzugsweise für eine zweite Phase II auf in der Speichereinrichtung hinterlegte zweite Werte und für eine dritte Phase III auf in der Speichereinrichtung hinterlegte Funktionen der zweiten Werte über die Zeit zurückgegriffen wird.

Dabei kann wiederum vorgesehen sein, dass die dritte Phase III bei einer bestimmten Gargutgröße, wie einer bestimmten Kerntemperatur, oder einer bestimmten Gargröße, wie zu einem bestimmten Zeitpunkt, insbesondere beim Wechsel zwischen zwei Garvorgangabschnitten, zu einem Zeitpunkt $t_3$ startet.

Mit der Erfindung wird dabei vorgeschlagen, dass die bestimmte Kerntemperatur als die Kerntemperatur $T_{K3}$ ausgewählt wird, bei der 1/3, 1/2 oder 2/3 der Soll-Kerntemperatur TK4 am Ende des Garvorgangs oder ein Wendepunkt im Verlauf der Kerntemperatur über die Zeit erfasst wird.

Ferner kann vorgesehen sein, dass der bestimmte Zeitpunkt als der Zeitpunkt ausgewählt wird, zu dem ein Garvorgangabschnittswechsel stattfindet, wie ein Wechsel von einer Angarphase zu einer Bräunungsphase oder dergleichen.

Des Weiteren wird vorgeschlagen, dass ein rechnerischer Fit des zeitlichen Verlaufs der Kerntemperatur mit einer Fit-Funktion durchgeführt wird, die den theoretischen Verlauf der Kerntemperatur über die Zeit widerspiegelt.

Dabei kann vorgesehen sein, dass zumindest ein Parameter der Fit-Funktion und/oder die Fit-Funktion selbst von einer Kundeneingabe abhängt bzw. abhängen.

Erfindungsgemäß kann dabei vorgesehen sein, dass zumindest ein Parameter der FitFunktion und/oder die Fit-Funktion selbst von im Speicher des Gargeräts gespeicherten Häufigkeitsverteilungen für verschiedene Gargutarten abhängt bzw. abhängen, wobei die in dem betreffenden Garvorgang auftretenden Häufigkeitsverteilungen vorzugsweise von der Historie des Betriebs des Gargeräts und/oder anderer Gargeräte, insbesondere baugleicher, Gargeräte abhängt bzw. abhängen.

Ferner kann dabei vorgesehen sein, dass der zeitliche Verlauf der Kerntemperatur bei einer starken Änderung des Garraumklimas abschnittsweiseweise extrapoliert wird, vorzugsweise abhängig von dem Kerntemperaturanstieg und/oder der Krümmung des Kerntemperaturanstiegs und der bereits erreichten Kerntemperatur und/oder dem bereits erreichten Kerntemperaturanstieg, insbesondere mit logarithmischen, linearen und/oder exponentiellen Funktionen. Alternativ ist es erfindungsgemäß möglich, dass eine letzte Phase IV des Garvorgangs zeitlich an den Garvorgang angepasst wird, insbesondere eine Dauer in einem Bereich zwischen 5 Sekunden und 120 Sekunden zugewiesen bekommt.

Schließlich wird erfindungsgemäß auch vorgeschlagen, dass Türöffnungen, insbesondere die Dauer einer Türöffnung, die Anzahl an Türöffnungen und/oder der Öffnungswinkel der Tür, bei der Berechnung der Restgarzeit berücksichtigt werden.

Der Erfindung liegt somit die überraschende Erkenntnis zugrunde, dass eine Restgarzeitanzeige vom Beginn bis zum Ende eines Garvorgangs möglich ist, wobei die Restgarzeitberechnung unterschiedlich für zumindest zwei Phasen stattfindet bzw. in zwei Phasen unterschiedlich geclustert wird. So können beispielsweise drei Phasen zum Einsatz kommen, wobei in der ersten Phase mittels von einem Kunden eingestellten Parametern, nämlich Soll-Gargutgrößen, eine erste Grobabschätzung einer maximalen Garzeit oder einer minimalen Garzeit stattfindet, dann in einer zweiten Phase mittels zusätzlicher Informationen, die während des Garvorgangs erfasst werden, eine erste Grobberechnung stattfindet, die in einer dritten Phase mittels weiterer Algorithmen verfeinert wird. Die entsprechende Verfeinerung kann beispielsweise durch Abspeichern des Verlaufs einer Restgarzeit, der Kerntemperatur, der Garraumtemperatur, der Feuchte oder dergleichen in vorangegangenen Garvorgängen dadurch bewerkstelligt werden, indem bei einem späteren Garen eines Garguts in einem Garvorgang, der bereits zuvor durchlaufen worden ist, die abgespeicherten Informationen berücksichtigt werden. Bei wiederholten Garvorgängen ist also eine genauere Vorhersage des Verlaufs eines Garvorgangs möglich. Es liegt also eine selbstlernende Funktion vor.

Im Sinne dieser Anmeldung soll unter einer Restgarzeit nicht nur eine Zeitdauer verstanden werden, die bis zum Fertiggaren einer Speise noch zu verstreichen hat, sondern auch eine Zeitdauer, die bis zum Auftauen, Vorgaren, Aufbacken, Finishing oder dergleichen noch zu verstreichen hat.

Als einstellbare Soll-Gargutgröße hat sich insbesondere die Kerntemperatur als geeignet herausgestellt, da sie ein Maß dafür ist, wie weit ein Garfortschritt im Gargut bereits gediehen ist. Anstelle der Erfassung der Kerntemperatur und Hinterlegung dieser erfassten Werte ist es auch denkbar, den sogenannten C-Wert zu erfassen (Kochwert), insbesondere bei einem Mikrowellengaren. Der C-Wert ergibt sich dabei wie folgt:

$$RZ = \left( \frac{dKT - dKT\min}{dKT\max - dKT\min} \right) \cdot \left( RZ\max - RZ\min \right) + RZ\min$$

UF = Umrechnungsfaktor,

BT = Bezugstemperatur = 100°C,

Tk(t) = Kerntemperaturverlauf,

St = Zeitpunkt, bei dem eine Starttemperatur überschritten wurde, abhängig vom Gargut und

t' = Ist-Zeit.

Bei einer ersten Nutzung eines Gargeräts zum Durchführen eines erfindungsgemäßen Verfahrens wird auf werkseitig hinterlegte Informationen zugegriffen, die erst im Betrieb des Gargeräts durch dabei aufgenommene Informationen nach und nach ersetzt oder ergänzt werden. Dabei kann ein Kunde selbst entscheiden, ob er die werkseitig hinterlegten Informationen oder die während des Betriebs erfassten Informationen bei seinen Garvorgängen oder eine Kombination aus beiden Informationen berücksichtigt haben möchte. Auch ist es möglich, dass zu unterschiedlichen Tageszeiten, also zur Zubereitung eines Mittagstisches oder Abendessens, zu unterschiedlichen Tagen, also zur Zubereitung eines Wochentagsmenüs oder Sonntagsmenüs, oder zu unterschiedlichen Saisons, wie im Winter, im Sommer, zu Weihnachten oder dergleichen, auf unterschiedliche Informationen zurückgegriffen wird, vorzugsweise automatisch.

Die während des Betriebs eines Gargeräts gespeicherten Informationen können zudem zur Klassifizierung von Kunden und zum Studium eines Benutzerverhaltens im Allgemeinen genutzt werden. Dies kann dann nicht nur bei der Berechnung von Restgarzeiten hilfreich sein, sondern auch um Verkaufsstrategien, Werbeaktionen oder dergleichen auszuarbeiten.

Aufgrund der Tatsache, dass bei der Restgarzeitberechnung auf hinterlegte Werte zurückgegriffen wird, ist auch eine Plausibilitätsprüfung während eines Garvorgangs möglich, die im Falle einer Fehlbedienung oder einer Beschädigung des Gargeräts zu einer Fehleranzeige führen kann, um unerwünschte Garergebnisse zu vermeiden.

Beispielsweise kann eine Bedienperson eines Gargeräts, mit dem das erfindungsgemäße Verfahren durchzuführen ist, zu Beginn eines Garvorgangs eine Gargutart, eine erwünschte Bräunungsstufe und eine erwünschte Kerntemperatur, die am Ende des Garvorgangs vorliegen sollen, eingeben. Sodann wird der Kunde zum Beladen von Gargut aufgefordert. Während des Beladungsvorgangs wird eine erste Abschätzung der Garzeit aufgrund besagter Kundeneinstellungen vorgenommen, so dass zum Zeitpunkt des Schließens der Garraumtür am Ende des Beladungsvorgangs auf einem Display bereits eine erste Abschätzung der Garzeit bzw. Restgarzeit aufscheinen kann. Bei dieser ersten Abschätzung wird auf empirische Daten aus unzähligen Versuchen des Gargeräteherstellers zurückgegriffen. In die Abschätzung können auch Daten eingehen, die in anderen Gargeräten bei Kunden aufgenommen wurden und die zuvor dort ausgelesen und beim Gargerätehersteller ausgewertet wurden. Wählt ein Kunde beispielsweise die Betriebsart "Großbraten", eine hohe Soll-Kerntemperatur und eine mittlere Bräunungsstufe, so wird die Garzeit länger sein als in dem Fall, in dem er in der Betriebsart "Großbraten" eine niedrige Soll-Kerntemperatur und eine niedrige Bräunungsstufe wählt. Während der ersten Phase werden dann Messdaten zur Berechnung einer genaueren Restgarzeit aufgenommen. Bei rein zeitlich geführten Garvorgängen ist beispielsweise lediglich der Verlauf der Garraumtemperatur zur Erfassung der Last, also insbesondere der Gargutmenge im Garraum, nötig. Sobald dann die Last erfasst worden ist, kann die zweite Phase starten und mit ihr eine genauere Restgarzeitanzeige. Diese die erfasste Last berücksichtigende Restgarzeitanzeige ist auch exakt, da dann alle die Garzeit bestimmenden Parameter bekannt sind.

Findet jedoch ein kerntemperaturgeführtes Garverfahren statt, ist nach Beladen des Garraums mit Gargut ein Kerntemperaturfühler in ein Gargut einzuführen, und während der ersten Phase können dann die erfassten Kerntemperaturwerte ausgewertet werden, bspw. zur Bestimmung des Gargutkalibers. Sobald das Gargutkaliber bestimmt ist, kann eine genauere Restgarzeitberechnung stattfinden und die zweite Phase starten.

Da jedoch bei kerntemperaturgeführten Garvorgängen und aufgrund der Tatsache, dass ein Garen von Gargut von außen nach innen stattfindet, der Zeitverlauf der Kerntemperatur eine große Rolle bei der Führung des Garverfahrens einnimmt, kann während der zweiten Phase der Verlauf der Kerntemperatur über die Zeit erfasst werden, um schließlich unter Zurückgriff auf Formeln eine exakte Restgarzeit zu berechnen. Exakt ist diese Restzeitberechnung beispielsweise ab einem Wendepunkt im Verlauf der Kerntemperatur über die Zeit. Sobald dieser durchlaufen ist, kann dann in eine dritte Phase gewechselt werden, in der dann eine exakte Restgarzeitanzeige möglich ist.

Das Gargutkaliber kann bspw. bestimmt werden, indem ein erster messbarer Anstieg der Kerntemperatur ausgewertet wird. Je früher die Kerntemperatur ansteigt, desto kleiner ist das Kaliber des Garguts. Somit kann bei unveränderter Kerntemperatur mit zunehmender Zeit das Gargutkaliber als ein größeres eingestuft werden. Dabei können Schwellen für definierte Gargutkaliber gesetzt werden, oder die Gargutkaliber durch eine mathematische Definition bestimmt werden.

Wird bei der Erfassung von Garvorgängen erkannt, dass die berechnete Garzeit stets beispielsweise eine Minute unterhalb der tatsächlichen Gesamtzeit liegt, kann eine Korrekturgröße von einer Minute bei zukünftigen Berechnungen von Restgarzeiten berücksichtigt werden. Das Gargerät lernt somit aus seinen Fehlern bei der Restgarzeitabschätzung. Mit anderen Worten wird die Restgarzeitanzeige umso genauer, je länger sich ein Gargerät in Betrieb befindet.

Weitere Merkmale und Vorteile der Erfindung ergeben sich aus der nachfolgenden Beschreibung, in der ein Ausführungsbeispiel des erfindungsgemäßen Verfahrens anhand von schematischen Zeichnungen erläutert wird. Dabei zeigt:

Figur 1     den Verlauf der Kerntemperatur $T_K$ sowie der Garraumtemperatur To über die Zeit t;

Figur 2     eine Spanne von möglichen Restzeiten RZ auf einer Zeit-Achse sowie statistische Gaußverteilungen für Gargüter mit unterschiedlichem Kaliber; und

Figur 3     den Verlauf der Kerntemperatur $t_K$ über die Zeit t für Gargüter mit unterschiedlichen Kalibergrößen.

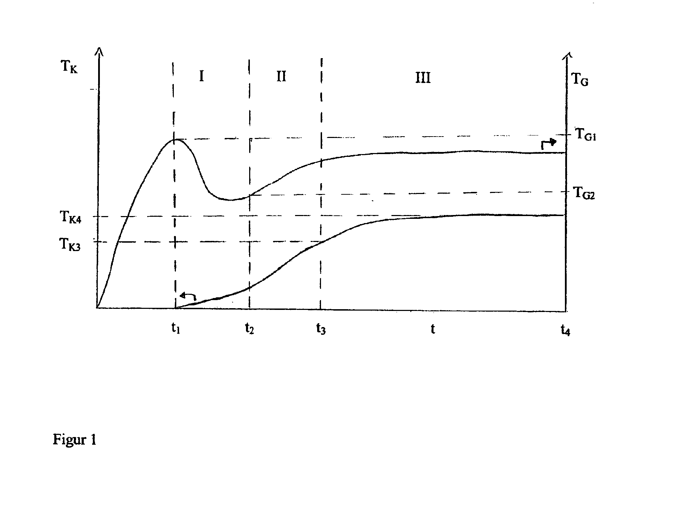

Mit Figur 1 ist der Verlauf eines kerntemperaturgesteuerten Garvorgangs schematisch wiedergegeben. Solch ein Verlauf tritt beispielsweise bei dem Garen eines Bratens auf Zu Beginn eines Garvorgangs muss dabei ein Kunde über eine nicht gezeigte Bedieneinrichtung eines nicht gezeigten Gargeräts der nicht gezeigten Steueroder Regeleinrichtung des Gargeräts mitteilen, welche Gargutart gegart werden soll, also im vorliegenden Fall Braten, und welcher Gargrad erwünscht wird. Hierzu gibt der Kunde bspw. eine gewünschte Bräunung und eine gewünschte Kerntemperatur $T_{K4}$ ein, die am Ende des Garvorgangs vorliegen sollen. Danach kann der Kunde seinen Braten in einen nicht gezeigten Garraum des Gargeräts einbringen und wird über eine nicht gezeigte Anzeigeeinrichtung des Gargeräts aufgefordert, einen nicht gezeigten Kerntemperaturfühler in das Gargut einzuführen. Während dieses Beladens des Gargeräts wird anhand der Kundenvorgaben, insbesondere betreffend die Gargutart, die Bräunung und die Kerntemperatur, eine Garzeit erstmals abgeschätzt, und zwar unter Zurückgriff auf in einer nicht gezeigten Speichereinrichtung hinterlegte Werte und Formeln. Sobald der Kunde dann mit dem Beladen fertig ist und die nicht gezeigte Tür des Garraums schließt, erscheint auf der Anzeigeeinrichtung besagte erste Grobabschätzung der Gesamtgarzeit, beispielsweise in der Form eines Maximalwertes RZmax und eines Minimalwertes RZmin für die Garzeit.

In Figur 1 ist der Zeitpunkt des Schließens der Garraumtür mit $t_1$ dargestellt. Bis zu diesem Zeitpunkt steigt die Garraumtemperatur $T_G$ auf den Wert $T_{G1}$ und sinkt danach aufgrund der in den Garraum eingebrachten Last auf den Wert $T_{G2}$, während die Kerntemperatur $T_K$ langsam ansteigt, wie im Bereich der Phase I in Figur 1 angedeutet. Während dieser ersten Phase ist die Restgarzeitanzeige bestimmt durch die erste Grobabschätzung und die tatsächlich verstreichende Zeit.

Sobald ein Minimum der Garraumtemperatur $T_G$ erfasst worden ist, lässt sich wieder unter Vergleich mit in der Speichereinrichtung hinterlegten Werten und Formeln die Last im Garraum bestimmen, also beispielsweise die Anzahl der in den Garraum eingeführten Braten. Eine noch präzisere Bestimmung der Last ist durch die Messung der Zeit möglich, die benötigt wird, um die Garraumtemperatur $T_G$ vom Minimum auf einen Wert über der Minimal-Temperatur aber unter der durch das Gargerät eingestellten Soll-Garraumtemperatur aufzuheizen. Dieser Wert ist dann von der Öffnungzeit der Garraumtür unabhängig. Basierend auf diesem Wert kann dann eine verbesserte Berechnung der Restgarzeit stattfinden, wobei die Anzeige der Restgarzeit hierauf zum Zeitpunkt $t_2$ wechselt. Während der dann folgenden in der Figur 1 mit II bezeichneten Phase, also der zweiten Phase, findet die Restgarzeitanzeige in Abhängigkeit von sowohl den Kundenvorgaben, der tatsächlich verstrichenen Zeit als auch der erfassten Last ab. Dies stellt eine Verbesserung der Berechnung der Restgarzeit dar, und auf der Anzeigeeinrichtung sollte ein Wert aufscheinen, der zwischen dem ursprünglich berechneten Maximalwert RZmax und Minimalwert RZmin liegt.

Während der zweiten Phase II steigt sowohl die Garraumtemperatur $T_G$ als auch die Kerntemperatur $T_K$ stetig an. Über den Verlauf der Kerntemperatur über die Zeit lässt sich die Thermokinetik des Garens erfassen und dann die Restgarzeit durch Zurückgriff auf bekannte Garprofile, also zuvor erfasste Verläufe der Kerntemperatur über die Zeit, berechnen. Zu diesem Zwecke kann eine Cluster-Analyse zum Einsatz kommen, wie sie in der DE 103 00 465 A1 beschrieben ist. Zum Zeitpunkt $t_3$ findet dann ein Wechsel der Anzeige der Restgarzeit zur Berücksichtigung besagter Garprof[iota]le statt, wobei der Zeitpunkt $t_3$ definiert ist als der Zeitpunkt, zu dem die Kerntemperatur einen Wert von 2/3 der gewünschten Soll-Kerntemperatur erreicht hat, also $T_{K3} = 2:3 \times T_{K4}$. In der folgenden mit III bezeichneten, dritten Phase nähern sich sowohl die Garraumtemperatur als auch die Kerntemperatur ihrem Endwert, so dass davon auszugehen ist, dass die Restgarzeitanzeige in dieser dritten Phase III sehr exakt ist, da sie in Abhängigkeit von den Kundenvorgaben, der tatsächlich verstrichenen Zeit, der erfassten Last und dem zeitlichen Verlauf der Kerntemperatur bestimmt wird.

Zum Zeitpunkt $t_4$, zu dem die Kerntemperatur den Soll-Kerntemperaturwert $T_{K4}$ erreicht, ist der Garvorgang abgeschlossen, und das Gargut sollte die Bräunung und die Kerntemperatur aufweisen, die der Kunde zu Beginn des Garvorgangs eingestellt hat. Auf der Anzeigeeinrichtung erscheint dann eine Restgarzeit von 0.

Nach Abschluss des mit Bezug auf die Figur 1 beschriebenen Garvorgangs kann ein Kunde bestimmen, ob dieser Garvorgang in der Speichereinrichtung gespeichert werden soll, um bei zukünftigen Garverfahren berücksichtigt zu werden. Alternativ kann auch vorgesehen sein, dass dieser Garvorgang automatisch in der Speichereinrichtung gespeichert wird, insbesondere wenn er beispielsweise weniger als 20% von dem repräsentativen Garprofil, dem der Garvorgang während der Cluster-Analyse zugeordnet worden ist, abweicht.

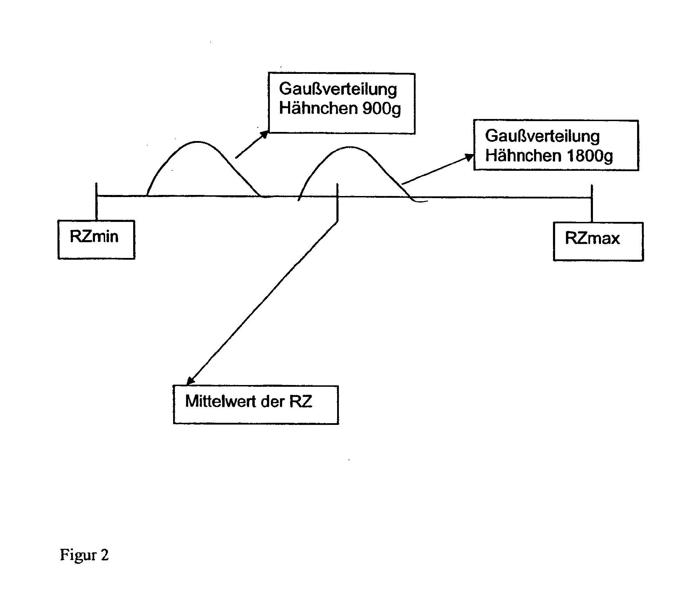

Figur 2 zeigt die Zeitspanne auf einer Zeit-Achse zwischen der maximalen Gardauer RZmax und der minimalen Gardauer RZmin, die in Phase I des Garvorgangs angezeigt wird oder werden.

Die Grobabschätzung, die zur Bestimmung der beiden Grenzen führt, baut auf empirisch ermittelten Werten sowie Formeln für jedes Gargut und jede gewünschte Garparametereinstellung auf. Zusätzlich werden auch historische Daten, die bei zuvor abgelaufenen Prozessen, entweder in demselben Gargerät oder anderen Gargeräten, aufgezeichnet wurden, bei der Berechnung herangezogen.

Für die Auswertung der Daten können verschiedene statistische Auswertemöglichkeiten, wie zum Beispiel Mittelwertbildung, Gauß-Verteilung, Standardabweichung oder andere Verfahren zur Bestimmung der Varianz verwendet werden.

Die ausgewerteten Daten werden mit berechneten Werten verglichen. Dazu können sie in die Formeln eingesetzt werden, mit denen auch die Werte für die Gardauer berechnet werden, um einen verbesserten und konkreteren Wertebereich zwischen RZmin und RZmax zu erhalten. So ist es möglich, eine immer bessere Abschätzung für den Gardauerwert zu erhalten, indem im Laufe der Gerätenutzung immer wieder auf die historischen Daten zurückgegriffen wird. Da in den Garprozessen unterschiedliche Lebensmittel in unterschiedlichen Größen in einem einzigen Garprozess perfekt zubereitet werden können, wird mehr als eine Gauß-Verteilung bei einer Vielzahl von durchgeführten Garprozessen für den Gardauerwert zu beobachten sein. Darin liegt auch unter anderem der Unterschied zu den im Stand der Technik bekannten Verfahren, wie z. B. der EP 1 384 951 A1 sowie der parallelen US 7,057,142 B1.

In Figur 2 sind zwei unterschiedliche Gauß- Verteilungen für unterschiedlich große Hähnchen (mit 900g und 1800g) eingezeichnet. Dabei wird auf einer nicht eingezeichneten Y-Achse die Häufigkeit dargestellt, mit der solche Hähnchen bei den auf der X- Achse verlaufenden Gesamtgarzeiten fertig gegart werden.

Ein Beispiel für eine erfindungsgemäße Formel ist z. B.:

$$RZ_{min/max} = Faktor * KTSolleingabe +/- n,$$

wobei der Faktor abhängig vom Produkt und von den vom Kunden ausgewählten Gargutparametern ist. Der Wertebereich des Faktors kann dabei zwischen 1 bis 150 liegen. Die KTSolleingabe ist der Zielwert der Kerntemperatur, der vom Kunden eingegeben wird. Der Zahlenwert (n) ist von den vom Kunden ausgewählten Gargutparametern und vom Produkt abhängig. Der Wertebereich der Zahl n kann dabei zwischen -1500 und +2000 liegen. Der Faktor und die Zahl n sind also reine Zahlenwerte, die der Anpassung der Restzeitgrenzen RZmin und RZmax dienen und können empirisch gewonnen werden.

Eine Phase II setzt ein, wenn die Intelligenzen, wie z. B. Lasterkennung, Kalibererkennung, Frisch-/Gefrorenerkennung oder andere Produkterkennungen mit Hilfe von Sensoren, z. B. chemischen Gassensoren, optischen Sensoren, abgelaufen sind. Grundlage dafür sind die in der Phase I ermittelten Werte für RZmin und RZmax. Als Ergebnis kann in Phase II nunmehr nur noch eine Restzeit angezeigt werden und kein Bereich. Eine Formel, die solch einen Vorgang in Abhängigkeit vom Verlauf der Kerntemperatur darstellt ist z. B.

$$RZ = \left( \frac{dKT - dKT\,min}{dKT\,max - dKT\,min} \right) \cdot (RZ\,max - RZ\,min) + RZ\,min ,$$

wobei RZ die angezeigte Restzeit, dKT der Anstieg der Kerntemperatur, dKTmin der minimale Anstieg der Kerntemperatur und dKTmax der maximale Anstieg der Kerntemperatur ist. Der maximale und der minimale Kerntemperaturanstieg beziehen sich auf die historischen Werte, die zu dem ausgewählten Garprozess aufgenommen wurden. Der Anstieg der Kerntemperatur dKT kann durch Bilden eines Differenzenquotienten aus diskreten Werten der Kerntemperatur KT bei verschiedenen Zeitpunkten bestimmt werden.

Während der Phase II und während einer darauf folgenden Phase III wird der Kerntemperaturverlauf mit Hilfe einer Fit-Funktion extrapoliert, wobei sich die Fit-Funktion einer Temperatur Ts exponentiell annähert. Die Temperatur Ts stellt neben der Abklingkonstante λ einen der zu ermittelnden Parameter dar, wie anhand der folgenden Formel ersichtlich ist:

$$KT(t) = [KT(t_0) - T_S] \cdot \exp(-\lambda \cdot t) + T_S ,$$

wobei KT($t_0$) die Kerntemperatur KT zum Zeitpunkt $t_0$ ist und $t_0$ ein beliebiger Zeitpunkt ist, der nicht mit dem Beginn der dritten Phase übereinstimmen muss. Der Wert für λ liegt zwischen $1 \left[ \frac{1}{min} \right]$ und $10^{-4} \left[ \frac{1}{min} \right]$. und

Die Einheiten von λ sind in eckige Klammern geschrieben.

Die Werte besitzen dabei eine recht große Schwankungsbreite. So liegt λ z. B. bei Kurzgebratenem bei einem Wert zwischen 0,3 und 0,03, also um eine Zehnerpotenz auseinander. Die Ursache liegt darin, dass der Parameter Ts nicht der realen Siedetemperatur entspricht, sondern eher ein Maß für die Krümmung der Kurve des KT- Verlaufs angibt. Ts nimmt einen sehr großen und λ einen sehr kleinen Wert an, wenn der KT- Verlauf nur schwach gekrümmt ist.

Im Allgemeinen lassen sich so die KT-V erlaufe sehr gut annähern. Ändert sich das Garraumklima jedoch allzu stark, wie es z. B. bei einem Abkühlschritt möglich ist, muss der KT-Verlauf abschnittsweise extrapoliert werden.

Die letzte Minute eines Garprozesses, die als eine Phase IV bezeichnet werden kann, wird an den Garprozess angepasst und bewegt sich zwischen 5 Sekunden und 119 Sekunden.

Die Güte der Restzeitberechnung kann am Ende des Garprozesses überprüft werden. Das heißt, dass die in Phase II erstmals angezeigte Restzeit und deren Verlauf mit der tatsächlichen Gesamtgarzeit am Ende verglichen werden kann. Dieser Vergleich kann selbstverständlich auch für die anderen Phasen durchgeführt werden. Sollten sich hierbei im Verlauf mehrerer gleichartiger Garprozesse eindeutige Tendenzen ergeben, so kann in folgenden Garprozessen eine entsprechende Korrektur vorgenommen werden.

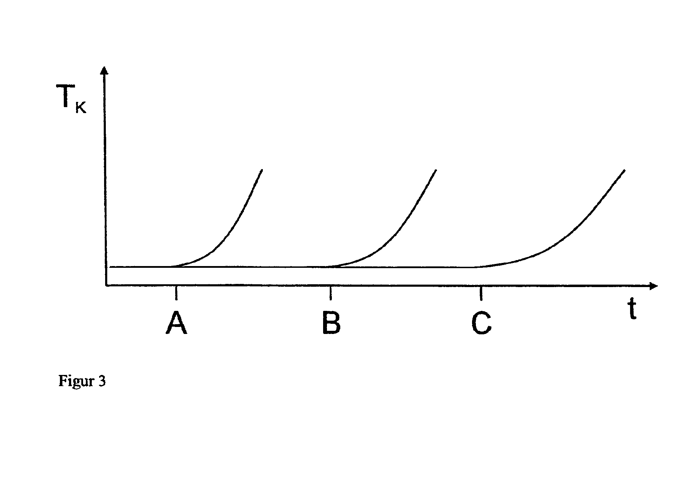

In Figur 3 ist der Verlauf der Kerntemperatur $T_K$ über die Zeit für drei verschiedene Gargüter mit unterschiedlichen Gargutkalibern dargestellt. Bei dem Gargut mit dem kleinsten Gargutkaliber beginnt die Kerntemperatur zum Zeitpunkt A zu steigen, bei dem Gargut mit dem mittleren Gargutkaliber zum Zeitpunkt B und bei dem Gargut mit dem größten Gargutkaliber erst zum Zeitpunkt C.

Wird ein Gargut in den Garraum eines Gargeräts gebracht und dort mit Wärme beaufschlagt, so benötigt die Wärmeenergie eine gewisse Zeit, um bis ins Innerste des Garguts vorzudringen. Die Zeitdauer, die verstreicht, bevor sich das Innerste des Garguts erwärmt, also die Kerntemperatur $T_K$ ansteigt, hängt davon ab, wie hoch die Wärmeleitfähigkeit des Garguts ist und welche geometrischen Abmessungen das Gargut aufweist. Durch die Auswahl eines bestimmten Garprozesses durch den Anwender kann auf die Art des Garguts zurückgeschlossen werden. Die Wärmeleitfähigkeiten unterschiedlicher Fleischsorten unterscheiden sich nicht wesentlich voneinander, so dass davon ausgegangen werden kann, dass die Wärmeleitfähigkeit für unterschiedliche Fleischstücke bei einem Garprozess wie z. B. "Großbraten" stets die gleiche ist. Somit hängt der Zeitpunkt, zu dem die Kerntemperatur $T_K$ ansteigt, im Wesentlichen von den geometrischen Abmessungen des Garguts ab. Je größer der Durchmesser des Garguts ist, also je größer das Gargutkaliber des Garguts ist, desto später wird die Kerntemperatur des Garguts beginnen anzusteigen.

Ist die Kerntemperatur bis zum Zeitpunkt A nicht gestiegen, kann es sich nicht um ein dem Zeitpunkt A zugeordnetes Kaliber handeln, sondern nur um ein größeres Kaliber. Wenn die Kerntemperatur zum Zeitpunkt B immer noch nicht angestiegen ist, so scheidet auch das dem Zeitpunkt B zugeordnete Gargutkaliber als Größe für das im Garraum befindliche Gargut aus. Wenn die Kerntemperatur also unverändert bleibt, so kann mit zunehmender Zeit von einem größeren Kaliber ausgegangen werden. Die Anzahl der bestimmten Zeitpunkten zugeordneten Gargutkaliber kann beliebig erhöht oder durch eine mathematische Funktion wie folgt bestimmt werden:

$$K = t \cdot c,$$

wobei K der Kaliberradius, t die Zeit, in der kein Anstieg der $T_K$ erfolgt, und c eine lebensmittelspezifische Konstante ist, die sich beispielsweise aus einer Anwendereingabe am Gargerät oder durch eine Messung eines Mehrpunktkerntemperaturfiihlers oder eines anderen Sensors ergibt.

Bei der Verwendung eines in ein Gargerät eingeführten Mehrpunktkerntemperaturfühlers, der sich durch voneinander beabstandete Temperaturfühler auszeichnet und beispielsweise in der DE 199 45 021 A1 und DE 299 23 215 A1 beschrieben ist, kann über die unterschiedlichen Zeitpunkte des Beginns des Temperaturanstiegs im Gargerät und/ oder über die unterschiedlichen Steigungen des Temperaturanstiegs im Gargut ein Wert ermittelt werden, der proportional der Wärmeleitfähigkeit in dem betreffenden Gargut ist. Weiterhin ist es möglich, mit solch einem Mehrpunktkerntemperaturfühler durch die Zeitversetzung des Beginns der Temperaturanstiege beispielsweise von zwei im Gargut äußeren Messpunkten, also nahe dem Rand des Garguts gemessenen Temperaturanstiege, mit bekanntem Abstand zwischen den Messpunkten den zu erwartenden Zeitpunkt des Temperaturanstiegs bei einem dritten oder weiteren Messpunkt an der Nadelspitze des Kemtemperaturfühlers, vorzugsweise im kältesten Bereich des Garguts, also im Kern des Garguts, vorauszuberechnen. Daher können also auch anhand des Anstiegs der Temperatur unterschiedlicher Messpunkte eines Mehrpunktkerntemperaturfühlers Aussagen über das Gargutkaliber getroffen werden.

Somit ist ein sehr frühzeitiger Beginn der Phase II erreichbar, indem eine verbesserte Bestimmung der Restgarzeit aufgrund von Messdaten des Kerntemperaturfühlers erfolgt, was insbesondere bei Gargütern größeren Kalibers von Bedeutung ist.

Die in der voranstehenden Beschreibung, in den Ansprüchen sowie der Zeichnung offenbarten Merkmale der Erfindung können sowohl einzeln als auch in jeder beliebigen Kombination für die Verwirklichung der Erfindung in ihren verschiedenen Ausführungsformen wesentlich sein.

**Patentansprüche**

1.  Verfahren zur Anzeige einer Restgarzeit während eines Garvorgangs in einem Gargerät mit einem Garraum, einer Heizeinrichtung, einer Anzeigeeinrichtung, einer Bedieneinrichtung, einer Speichereinrichtung, einer Steuer oder Regeleinrichtung und zumindest einer Sensiereinrichtung, wobei über die Bedieneinrichtung zumindest eine Soll-Gargutgröße eines zu garenden Garguts eingestellt werden kann, in deren Abhängigkeit die Restgarzeit bestimmt wird, um dann auf der Anzeigeeinrichtung angezeigt zu werden, **dadurch gekennzeichnet, dass**

• in einer ersten Phase I unmittelbar zu Beginn des Garvorgangs, die zu einem ersten Zeitpunkt $t_1$, der nach Beladen des Garraums mit Gargut liegt, startet, ein in Abhängigkeit von der eingestellten Soll-Gargutgröße abgeschätzter Mittelwert mit Fehlertoleranz der Restgarzeit angezeigt wird, wobei während der ersten Phase I zur Abschätzung der Restgarzeit ein Vergleich der eingestellten Soll-Gargutgröße mit zuvor empirisch und/oder über zumindest einen ersten Algorithmus bestimmten ersten Werten stattfindet, wobei die empirisch bestimmten ersten Werte in Testgarverfahren und/oder vorherigen Garvorgängen des Gargeräts und/oder anderer, insbesondere baugleicher, Gargeräte erfaßt worden sind.

• in zumindest einer weiteren, der Phase I zeitlich nachfolgenden Phase II, III des Garvorgangs zumindest ein in Abhängigkeit von einem Vergleich zwischen in der Speichereinrichtung hinterlegten Werten und zumindest einem über die Sensiereinrichtung erfassten Wert zumindest einer Gargutgröße oder Gargröße des Gargeräts bestimmter Schätzwert der Restgarzeit angezeigt wird, wobei

die in der weiteren Phase II, III zum Vergleich herangezogenen Werte aus empirisch bestimmten zweiten Werten und/oder über zumindest einen zweiten Algorithmus bestimmte zweite Werte ausgewählt werden,

• am Ende eines Garvorgangs während desselben erfasste Werte automatisch in der Speichereinrichtung als erste oder zweite Werte hinterlegt werden oder über die Anzeigeeinrichtung eine Anfrage ausgegeben wird, ob die erfassten Werte als erste oder zweite Werte in der Speichereinrichtung hinterlegt werden sollen.

2. Verfahren nach Anspruch 1, **dadurch gekennzeichnet, dass** für die Restgarzeit ein vorgegebener Bereich um den Mittelwert angezeigt wird, der den Fehlertoleranzbereich umfasst.

3. Verfahren nach Anspruch 1 oder 2, **dadurch gekennzeichnet, dass** die Soll-Gargutgröße bestimmt wird aus

   • einem Gargrad,
   • einer Gargutbemaßung und/oder
   • einem Auftaugrad zu einem bestimmten Zeitpunkt des Garvorgangs.

4. Verfahren nach einem der vorangehenden Ansprüche, **dadurch gekennzeichnet, dass**
die weitere Phase II, III nach Erfassen der Last im Garraum und/oder nach Erfassen, ob das Gargut im Garraum frisch, vorgegart oder gefroren ist, und/oder nach Erfassen einer Gargutbemaßung, zu einem zweiten Zeitpunkt $t_2$ startet.

5. Verfahren nach einem der vorangehenden Ansprüche, **dadurch gekennzeichnet, dass**
die ersten und/oder zweiten Werte sich zwecks Selbstanlernung über den Betrieb eines Gargeräts zur gewichteten Berücksichtigung der in vorangegangenen Garvorgängen erfassten Werte geändert werden.

6. Verfahren nach einem der vorangehenden Ansprüche, **dadurch gekennzeichnet, dass**
während der weiteren Phase II, III bei der Bestimmung der Restgarzeit die tatsächlich verstrichene Zeit und/oder der abgeschätzte Restgarzeitverlauf der ersten Phase I berücksichtigt wird bzw. werden.

7. Verfahren nach einem der vorangehenden Ansprüche, **dadurch gekennzeichnet, dass**
ein Vergleich der in den unterschiedlichen Phasen I, II, III errechneten Restgarzeiten untereinander sowie mit in der Speichereinrichtung hinterlegten Werten zur Plausibilitätsprüfung und/oder Bestimmung einer Korrekturgröße stattfindet, und
im Falle der Bestimmung einer Korrekturgröße dieselbe in folgenden Garvorgängen zur Berechnung der Restgarzeit berücksichtigt wird, und bei erfasster fehlender Plausibilität ein Signal auf der Anzeigeeinrichtung ausgegeben wird.

8. Verfahren nach einem der vorangehenden Ansprüche, **dadurch gekennzeichnet, dass**
die zur Restgarzeitbestimmung herangezogenen Werte, insbesondere umfassend die ersten und/oder zweiten Werte, in Abhängigkeit von einer Tageszeit, einem Tag, einer Jahreszeit, einer Saison, einem Aufstellungsort des Gargeräts, einer Bediensprache des Gargeräts und/oder einer aus zuvor erfassten Garvorgängen bestimmten Anwendergewohnheit ausgewählt werden.

9. Verfahren nach einem der vorangehenden Ansprüche, **dadurch gekennzeichnet, dass**

   • bei zeitgesteuerten Garvorgängen nur eine weitere Phase nach einer Lasterkennung startet oder
   • bei kerntemperaturgesteuerten Garvorgängen zwei weitere Phasen nach einer Lasterkennung und/oder Kalibererkennung nacheinander starten, wobei vorzugsweise
   für eine zweite Phase II auf in der Speichereinrichtung hinterlegte zweite Werte und

für eine dritte Phase III auf in der Speichereinrichtung hinterlegte Funktionen der zweite Werte über die Zeit zurückgegriffen wird.

10. Verfahren nach Anspruch 9, **dadurch gekennzeichnet, dass** die dritte Phase III bei einer bestimmten Gargutgröße, wie einer bestimmten Kerntemperatur, oder einer bestimmten Gargröße, wie beim Wechsel zwischen zwei Garvorgangabschnitten, zu einem Zeitpunkt $t_3$ startet.

11. Verfahren nach Anspruch 9, **dadurch gekennzeichnet, dass** die bestimmte Kerntemperatur als die Kerntemperatur $T_{K3}$ ausgewählt wird, bei der 1/3, 1/2 oder 2/3 der Soll-Kerntemperatur $T_{K4}$ am Ende des Garvorgangs oder ein Wendepunkt im Verlauf der Kerntemperatur über die Zeit erfasst wird.

12. Verfahren nach einem der vorangehenden Ansprüche, **dadurch gekennzeichnet, dass** Türöffnungen, insbesondere die Dauer einer Türöffnung, die Anzahl an Türöffnungen und/oder der Öffnungswinkel der Tür, bei der Berechnung der Restgarzeit berücksichtigt werden.

## Claims

1. A method for displaying a residual time until a cooking process has been finished during a cooking process in a cooking appliance which comprises a cooking chamber, a heating device, a display device, an operating device, a memory device, a control or regulation device and at least one sensor device, wherein at least one desired cooking product variable of the product to be cooked can be set by means of the operating device, according to which the residual cooking time is determined for display on the display device, **characterized in that**

   • during a first phase I immediately at the start of the cooking process, which starts at an first time $t_1$ after loading the cooking product into the cooking chamber, an average value including fault tolerance of the residual cooking time is displayed, which is estimated as a function of the set desired cooking product variable, whereby during the first phase I a comparison between the set desired cooking product variable and first values previously determined empirically and/or by means of at least a first algorithm is carried out, in order to estimate the residual cooking time, where the first values determined empirically have been detected in test cooking processes and/or previous cooking processes of the cooking appliance and/or other, in particular structurally identical, cooking appliances,
   • in at least one further phase II, III of the cooking process, which follows phase I, at least one estimated value of the residual cooking time is displayed which has been determined as a function of the comparison between values stored in the memory device and at least one value detected by the sensor device of at least one cooking product variable or cooking variable of the cooking appliance, where the values used in the further phase II, III for comparison are selected from empirically determined second values and/or second values determined by means of at least one second algorithm,
   • at the end of a cooking process, values detected during the same are automatically stored in the memory device as first or second values, or the display device asks whether the detected values are to be stored as first or second values in the memory device.

2. The method according to Claim 1, **characterized in that** a given range around the average value, which includes the fault tolerance range, is displayed for the residual cooking time.

3. The method according to Claim 1 or 2, **characterized in that** the desired cooking product variable is determined based on

   • the degree of cooking,
   • the dimensions of the cooking product and/or
   • the degree of thawing at a particular time of the cooking process.

4. The method according to any one of the preceding claims, **characterized in that** the further phase II, III starts at a second time $t_2$ after detecting the load in the cooking chamber and/or after detecting whether the cooking product in the cooking chamber is fresh, pre-cooked or frozen, and/or after detecting the dimensions of the cooking product.

5. The method according to any one of the preceding claims, **characterized in that** the first and/or second values are amended for the purposes of self-instruction, by means of the operation of a cooking appliance, for weighted consideration of the values detected during previous cooking processes.

6. The method according to any one of the preceding claims, **characterized in that** during the further phase II, III, the time which has actually elapsed and/or the estimated course of the residual cooking time of the first phase I is or are taken into account during the determination of the residual cooking time.

7. The method according to any one of the preceding claims, **characterized in that** the residual cooking times calculated during the various phases I, II, III are compared with one another and with values stored in the memory device, in order to check for plausibility and/or to determine a correction value, and in the case of determining a correction value, the same is taken into account in the following cooking processes, in order to calculate the residual cooking time, and if a lack of plausibility is detected, a signal is emitted on the display device.

8. The method according to any one of the preceding claims, **characterized in that** the values used for determining the residual cooking time, which comprise in particular the first and/or second values, are selected as a function of the time of day, the day, the time of year, the season, the installation site of the cooking appliance, the operating language of the cooking appliance and/or user habits determined from previously detected cooking processes.

9. The method according to any one of the preceding claims, **characterized in that**

  • in the case of time-controlled cooking processes only one further phase starts following detection of the load or
  • in the case of core temperature-controlled cooking processes two further phases start successively following load detection and/or size detection, whereby preferably second values stored in the memory device are accessed during the second phase II, and functions of the second values over time stored in the memory device are accessed during the third phase III.

10. The method according to Claim 9, **characterized in that** the third phase III starts at a time $t_3$ in the case of a particular cooking product variable such as a particular core temperature, or a particular cooking variable such as switching between two cooking process stages.

11. The method according to Claim 9, **characterized in that** the core temperature determined is selected as the core temperature $T_{K3}$, in which case 1/3, 1/2 or 2/3 of the desired core temperature $T_{K4}$ is detected at the end of the cooking process, or a turning point in the curve of core temperature is detected over time.

12. The method according to any one of the preceding claims, **characterized in that** the opening of a door, in particular the amount of time the door is opened, the number of times the door is opened and/or the opening angle of the door, is/are taken into account during the calculation of the residual cooking time.

**Revendications**

1. Procédé servant à indiquer un temps de cuisson restant pendant un processus de cuisson dans un appareil de cuisson qui comprend une chambre de cuisson, un dispositif chauffant, un dispositif de signalisation, un dispositif de conduite, un dispositif à mémoire, un dispositif de commande ou de régulation, ainsi qu'au moins un dispositif de détection, dans lequel
il est possible de régler, par le biais du dispositif de conduite, au moins une grandeur d'aliment à cuire prescrite d'un aliment à cuire, en fonction de laquelle le temps de cuisson restant va être déterminé puis indiqué sur le dispositif de signalisation, **caractérisé en ce que**

  • dans une première phase I dès le début du processus de cuisson, qui commence à un premier instant $t_1$ après le chargement de la chambre de cuisson dans laquelle se trouve dorénavant un aliment à cuire, une valeur maximale du temps de cuisson restant dépendant de une valeur moyenne estimée en fonction de la grandeur d'aliment à cuire prescrite réglée, avec tolérance d'erreur du temps de cuisson restant, va être signalée, dans lequel, pendant la première phase I, pour estimer le temps de cuisson restant, une comparaison de la grandeur d'aliment à cuire prescrite réglée avec des premières valeurs déterminées auparavant de manière empirique et/ou à l'aide d'au moins un premier algorithme a lieu, les première valeurs déterminées de manière empirique ayant été détectées lors d'un procédé de cuisson de test et/ou de processus de cuisson antérieurs de l'appareil de cuisson et/ou d'autres appareils de cuisson, en particuliers identiques,
  • dans au moins une autre phase II, III suivante du processus de cuisson, ultérieure à la phase I, va être signalée au moins une valeur estimée du temps de cuisson restant, en fonction d'une comparaison entre des valeurs mémorisées précédemment dans le dispositif à mémoire et au moins une valeur détectée au moyen du dispositif de détection d'au moins une grandeur d'aliment à cuire ou d'une grandeur de cuisson à point de l'appareil de cuisson, dans lequel dans les phases suivantes II, III, vont être sélectionnées, pour comparaison, des valeurs choisies parmi des secondes valeurs déterminées de manière empirique et/ou des secondes valeurs estimées à l'aide d'au moins un second algorithme,

• à la fin du processus de cuisson, les mêmes valeurs détectées vont être mémorisées automatiquement dans le dispositif à mémoire en tant que premières ou secondes valeurs, ou une question va être émise par le dispositif de signalisation, pour savoir si les valeurs détectées doivent être mémorisées en tant que premières ou secondes valeurs dans le dispositif à mémoire.

2. Procédé selon la revendication 1, **caractérisé en ce qu'**une plage déterminée autour de la moyenne va être indiquée pour le temps de cuisson restant, qui comprend la plage de tolérance d'erreur.

3. Procédé selon la revendication 1 ou 2, **caractérisé en ce que** la grandeur d'aliment à cuire prescrite va être déterminée d'après

  • un degré de cuisson
  • une dimension d'aliment à cuire, et/ou
  • un degré de décongélation à un certain instant du processus de cuisson.

4. Procédé selon l'une quelconque des revendications précédentes, **caractérisé en ce que** la phase II, III suivante démarre à une deuxième instant $t_2$ après la détection de la charge dans la chambre de cuisson, et/ou après la détection du fait que l'aliment dans la chambre de cuisson est frais, précuit ou surgelé, et/ou après la détection de la taille d'un aliment à cuire.

5. Procédé selon l'une quelconque des revendications précédentes, **caractérisé en ce que** les premières et/ou secondes valeurs sont modifiées pour un auto-apprentissage du fonctionnement d'un appareil de cuisson grâce à la prise en compte pondérée des valeurs détectée lors de processus de cuisson précédents.

6. Procédé selon l'une quelconque des revendications précédentes, **caractérisé en ce que** au cours de la phase II, III suivante, va ou vont être pris en compte, lors de la détermination du temps de cuisson restant, le temps réel écoulé et/ou la durée de cuisson restante estimée de la première phase 1.

7. Procédé selon l'une quelconque des revendications précédentes, **caractérisé en ce que** une comparaison des temps de cuisson restants calculés aux phases I, II, III entre eux, ainsi qu'avec les valeurs mémorisées dans le dispositif à mémoire, a lieu pour un contrôle de vraisemblance et/ou la détermination d'une grandeur de correction, et dans le cas de la détermination, une grandeur de correction identique va être prise en compte dans des processus de cuisson suivants pour calculer le temps de cuisson restant, et en l'absence d'une quelconque vraisemblance détectée, un signal va être affiché sur le dispositif de signalisation.

8. Procédé selon l'une quelconque des revendications précédentes, **caractérisé en ce que** les valeurs utilisées pour l'estimation du temps de cuisson restant, y compris en particulier comprenant les premières et/ou secondes valeurs, vont être choisies en fonction d'un moment de la journée, d'une journée, d'un moment de l'année, d'une saison, d'une saison, d'un site d'installation de l'appareil de cuisson, d'une langue d'utilisation de l'appareil de cuisson et/ou des habitudes d'un utilisateur estimées d'après des processus de cuisson précédents.

9. Procédé selon l'une quelconque des revendications précédentes, **caractérisé en ce que**

  • dans les processus de cuisson commandés dans le temps, une phase suivante commence juste après une détection de charge, ou
  • dans les processus de cuisson commandés en fonction de la température à coeur, deux phases suivantes commencent à la suite après une détection d'une charge et/ou de détection de calibre, de préférence
  pour une deuxième phase II, en ayant recours à une seconde valeur mémorisée dans le dispositif à mémoire, et
  pour une troisième phase III, en ayant recours à des fonctions mémorisées dans le dispositif à mémoire de la seconde valeur au cours du temps.

10. Procédé selon la revendication 9, **caractérisé en ce que** la troisième phase III débute à un instant $t_3$ par une certaine

grandeur d'aliment à cuire estimée, comme une température à coeur estimée, ou une grandeur de cuisson à point estimée, en effectuant par exemple un changement entre deux parties de processus de cuisson.

11. Procédé selon la revendication 9, **caractérisé en ce que**
la température à coeur estimée va être choisie, en tant que température à coeur $T_{K3}$, comme étant 1/3, 1/2 ou 2/3 de la température à coeur prescrite $T_{K4}$ à la fin du processus de cuisson, ou un point d'inflexion de la courbe de la température à coeur au cours du temps va être détecté.

12. Procédé selon l'une quelconque des revendications précédentes, **caractérisé en ce que** des ouvertures de porte, en particulier la durée d'une ouverture de porte, le nombre d'ouvertures de portes et/ou l'angle d'ouverture de la porte, vont être pris en compte par le calcul du temps de cuisson restant.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2733362 A1
- US 7057142 B1
- US 7102107 B1
- DE 4217943 A1
- DE 19609116 A1
- EP 0701387 A2
- DE 10327864 A1
- DE 19718399 A1

- US 5075121 A
- EP 0248581 B1
- DE 10300465 A1
- DE 102004013553 B4
- DE 102006057923
- EP 1384951 A1
- DE 19945021 A1
- DE 29923215 A1